# EUROPEAN PATENT APPLICATION

(11) **EP 2 570 286 A1**
(43) Date of publication of application: **20.03.2013**
(21) Application number: 11780469.0
(22) Date of filing: 18.04.2011
(51) Int. Cl.: B60K 35/00

(54) **METER DEVICE**

(30) Priority: 12.05.2010 JP 2010110182
(71) Applicant: Calsonic Kansei Corporation, Saitama 331-0823 (JP)
(72) Inventor: ISHII Mikio, Saitama-shi Saitama 331-8501 (JP); ARAI Kazuo, Saitama-shi Saitama 331-8501 (JP)
(74) Representative: Oxley, Robin John George
(86) International application number: PCT/JP2011/059490
(87) International publication number: WO 2011/142212

(57) **Abstract**

In combination meters 1 provided with a display 5 in an instrument panel 2, an instrument device includes left and right turn-signal indication lamps 11a, 11b arranged on the instrument panel 2, and a control unit 12 to display arrow images 17, 18, 19, 20 that indicate a change in lighting state (blinking) of indication lamps (left and right turn-signal indication lamps 11a, 11b) on a screen image on the display 5.

## Description

### [TECHNICAL FIELD]

The present invention relates to an instrument device.

### [BACKGROUND OF THE INVENTION]

The patent document 1 discloses an instrument device that is arranged between a speed meter indicating a vehicle speed by an indicator needle and a tachometer indicating an engine speed by an indicator needle and on an instrument panel.

### [Patent Document]

Patent Document 1: Japanese Patent Application Laid-Open No. 2009-113700

### [DISCLOSURE OF THE INVENTION]

### [PROBLEM(S) TO BE SOLVED BY THE INVENTION]

The above-described prior art, however, has a problem in that a degree of driver's recognition of a change in a lighting state (blinking etc.) of an indication lamp (a turn-signal indication lamp, a high beam lamp for example) becomes low compared to that of information on a display because the driver has a tendency to give his or her consciousness on an image on a display compared to an indication lamp (a turn-signal indication lamp, a high beam lamp for example) arranged on the instrument panel.

The object of the present invention is to provide an instrument device that can improve a degree of driver's recognition to a change in a lighting state of an indication lamp.

### [MEANS FOR SOLVING THE PROBLEMS]

In order to solve the above-described problem, in the present invention, a design indicating an indication lamp changing a lighting state is displayed in a display image of a display.

### [EFFECT OF THE INVENTION]

Therefore, the driver can be easily aware of the change in the lighting state of the indication lamp due to the design displayed in the display image on the display in a case where the driver's consciousness is directed to the display.

### [BRIEF DESCRIPTION OF THE DRAWINGS]

FIG. 1 is a front view showing a combination meter 1 of a first embodiment;
FIG. 2 is a cross sectional view showing the combination meter 1 of the first embodiment;
FIG. 3 is a front view showing a main part of a combination meter of a second embodiment which indicates left and right turn-signal indication lamps (left and right arrows, and left and right wave pattern shapes) and an image of a display;
FIG. 4 is a front view showing a main part showing a combination meter of a third embodiment which indicates the left and right turn-signal indication lamps and an image of a display; and
FIG. 5 is a front view showing a main part showing a combination meter of a forth embodiment which indicates a high beam indication lamp and an image of a display.

### [BEST MODE FOR CARRYING OUT THE INVENTION]

Hereinafter, embodiments to realize an instrument device of the present invention will be described with reference to the accompanying drawings.

### <FIRST EMBODIMENT

First, a construction of an instrument device of a first embodiment will be described.

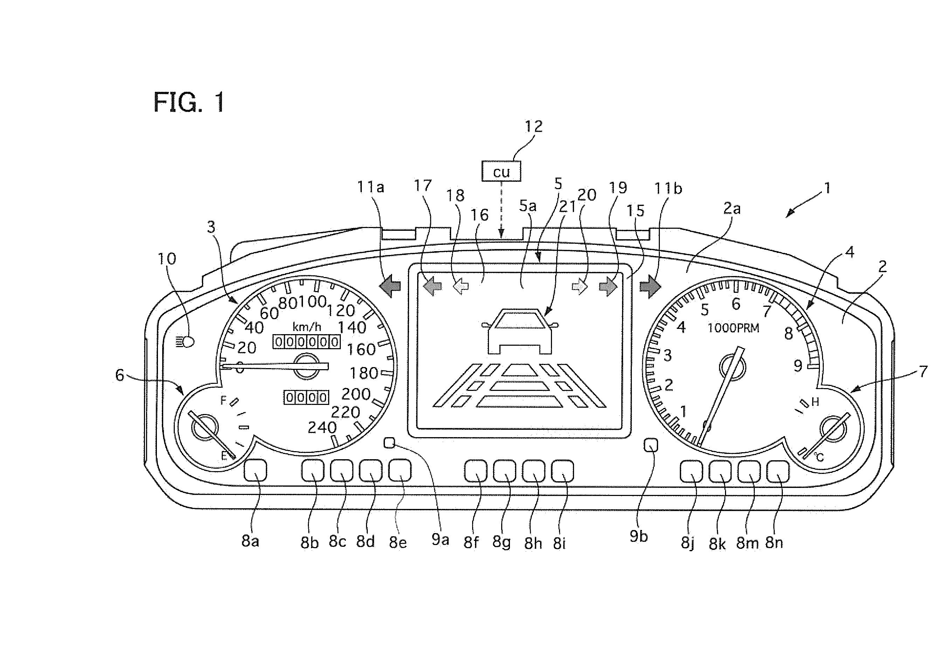

FIG. 1 is a front view showing a combination meter (corresponding to an instrument device of the present invention) 1 of the first embodiment, and

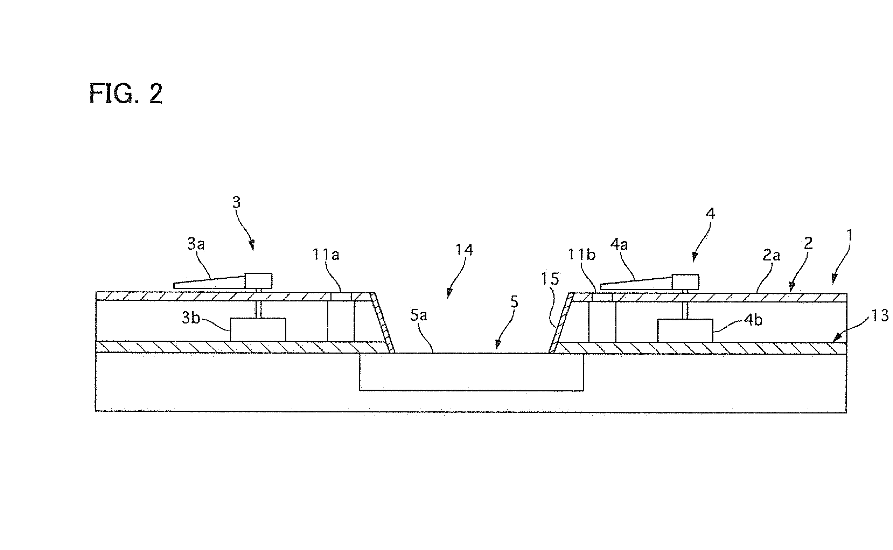

FIG. 2 is a cross sectional view showing the combination meter 1 of the first embodiment.

The combination meter 1 of the first embodiment is attached to be directed toward a rear side of a not-shown motor vehicle in a meter cluster provided on an instrument panel of the motor vehicle. In the combination meters 1, a speed meter 3 and a tachometer 4 are respectively arranged at the left side and the right side of a instrument panel 2, and a display 5 is arranged between the speed meter 3 and the tachometer 4 to display picture images and others. A fuel gauge 6 is arranged at the left side of the speed meter 3, and a water temperature gauge 7 is arranged at the right side of the tachometer 4.

Incidentally, the speed meter 3 and the tachometer 4, and the fuel gauge 6 and the water temperature gauge 7 are respectively arranged at a bilaterally symmetric position of the display 5, employing analog indicators that indicates by using an indicating needle. The display 5 is built in the combination meters 1, which improves safeness because time for a driver to avert his or her gaze from the front sight of the motor vehicle can be almost the same as that for the driver to read the meters.

In the instrument panel 2, various warning lamps and indication lamps are arranged under each meter 3, 4, 6, 7 and the display 5.
Specifically, they are a half-shut door warning lamp 8a, a seat belt warning lamp 8b, an SRS air bag warning lamp 8c, an ABS warning lamp 8d, a brake warning lamp 8e, a SLIP warning lamp 8f, an oil pressure warning lamp 8g, an engine warning lamp 8h, a charge warning lamp 8i, a VDCOFF indication lamp 8j, an A/T electronic control system warning lamp 8k, an A/T select position indication lamp 8m, and a manual mode indication lamp 8n. Incidentally, 9a indicates a reset knob of a trip meter, and 9b indicates a push knob. A high beam indication lamp 10 is arranged at the left side of the speed meter 3 and above the fuel gauge 6.

In the instrument panel 2, left and right turn-signal indication lamps (corresponding to an indication lamp of the present invention) 11a, 11b are arranged close to the display 5 and at the bilaterally symmetric position of the display 5. The left turn-signal indication lamp 11a is shown as an arrow heading toward the left side, and the right turn-signal indication lamp 11b is shown as an arrow heading toward the right side. Each of them respectively notifies its operation by blinking the light.

On a display screen of the display 5, information obtained by a not-shown car navigation system and information on the motor vehicle are displayed, while information on a fuel consumption, a power, a maintenance state and others may be also displayed. Further, a video picture obtained by a camera may be displayed in a case where the motor vehicle is a big size car or a van type car which are equipped with the camera monitoring both sides and the rear side of the motor vehicle.

As shown in FIG. 2, the display 5 is fixed on a control circuit board 13 arranged at a rear side (a front side of the motor vehicle) of the instrument panel 2, and it's display surface 5a is arranged to be headed toward a front surface side (the rear side of the motor vehicle) of the instrument panel 2 through an opening 14 formed in the instrument panel 2.
In other words, a step is formed between the display surface 5a of the display 5 and a character panel surface 2a of the instrument panel 2, so that a driver sees the display 5 at the position deeper than (at the front side of the motor vehicle) the instrument panel 2.
Incidentally, the opening 14 is closed by a finisher 15, which prevents the driver from seeing the control circuit board 13.
On the control circuit board 13, stepping motors each driving the indicating needle and LEDs used for each indication and warning lamp, including a stepping motor 3b driving the indicating needle 3a of the speed meter 3 and a stepping motor 4b driving the indicating needle 4a of the tachometer 4, are arranged.

The displays of each meter 3, 4, 6, 7, each indication/warning lamp 8a to 8n, 10, 11a, 11b, and display 5 in the combination meters 1 are controlled by a control unit (corresponding to a display control means of the present invention). The control unit 12 mainly consists of a well-known microcomputer having a CPU, a ROM, a RAM, as SRAM, an I/O which are provided on the control circuit board 13, and bus lines, carrying out various process based on programs stored in the ROM and the RAM.
The control unit 12 receives the various information on the motor vehicle through a CAN and the information from the navigation system, and it controls to drive the stepping motors moving the indicating needles of the meters 3, 4, 6, 7, also controlling each LED changing the lighting state of each indication/warning lamp 8a to 8n, 10, 11a, 11b and display contents of the display 5.

Operations of the left and right turn-signal indication lamps 11a, 11b and the high beam indication lamp 10 will be described as one example of the display contents.
The light of the left turn-signal indication lamp 11a is blinked when a left turn-signal indication switch is turned ON, while the light of the left turn-signal indication lamp 11a goes out when the left turn-signal indication switch is turned OFF. The light of the right turn-signal indication lamp 11b is blinked when a right turn-signal indication switch is turned ON, while the light of the right turn-signal indication lamp 11b goes out when the right turn-signal indication switch is turned OFF.
Incidentally, when the both of the left and right turn-signal switches are turned ON by ON of a hazard switch, the left and right turn-signal indication lamps 11a, 11b are blinked at the same time.
When head lamps are moved in an upward direction (a high beam state), the high beam indication lamp 10 is lighted, while the high beam indication lamp 10 is turned off when the head lamps are moved in a downward direction (a low beam state) or they are turned off.

In the first embodiment, in order to improve the degree of driver's recognition to the blinking (a change in a lighting state) of the left and right turn-signal lamps 11a, 11b, arrow images 17, 18, 19, 20 having shapes similar to those of the left and right turn-signal lamps 11a, 11b are blinked in the same period as the blinking periods of the left and right turn-signal lamps 11a, 11b in display image 16 shown on the display 5.
In FIG. 1, a display image 21 indicating a predetermined state of the vehicle at the center of the display image 16, the arrow images 17, 18, 19, 20 are displayed at the positions of the both side of the left and right turn-signal lamps 11a, 11b, being away from the display image 21.
Specifically, the arrow images 17, 18 are displayed at an upper left corner portion of the display image 16 near the left turn-signal lamp 11a, and the arrow images 19, 20 are displayed at an upper right corner portion of the display image 16 near the right turn-signal lamp 11b.
The arrow images 17, 18, 19, 20 are at the same positions in the upward and down ward direction and in the left and right direction as those of the left and right turn-signal lamps 11a, 11b.
In other words, the arrow mages 17, 18, 19, 20 are arranged on the horizontal line together with the left and right turn-signal lamps 11a, 11b.

The arrow images 17, 18 have the shapes similar to that of the left turn-signal lamp 11a, and in the same direction as that of the left turn-signal lamp 11a. The sizes of the left turn-signal lamp 11a, the arrow image 17, and the arrow image 18 become smaller in these orders.
In addition, the arrow images 17, 18 have the same color (green for example) as that of the left turn-signal lamp 11a, and the brightness of the left turn-signal lamp 11a, the arrow image 17 and the arrow image 18 become lower in these orders.
Incidentally, they may have the same system color and different tones instead of using the same color with different brightness. In this case, the tones of the left turn-signal lamp 11a, the arrow image 17 and the arrow image 18 become lower in these orders. Herein, the colors of the left turn-signal lamp 11a, the arrow image 17 and the arrow image 18 may have gradation.
A relationship between the arrow images 19, 20 and the right turn-signal indication lamp 11b is the same as that in which the arrow images 17, 18 and the left turn-signal indication lamp 11a are respectively replaced by the arrow images 19, 20 and the right turn-signal indication lamp 11b in the above-described explanation, and accordingly their explanations are omitted.

Herein, although the arrow images 17, 18, 19, 20 are indicated at the same time for convenience' sake in FIG. 1, in actual, the arrow images 17, 18 are blinked in the same period as that of the blinking of the left turn-signal indication lamp 11a, at different timing and in these orders, while the arrow images 19, 20 are blinked in the same period as that of the blinking of the right turn-signal indication lamp 11b, at different timing and in these orders. In other words, when the left turn-sigrtal indication lamp 11a is blinked, the arrow image 18, the arrow image 17, and the left-turn indication lamp 11a are blinked or displayed in a predetermined period in these orders.
When the right turn-signal indication lamp 11b is blinked, the arrow image 20, the arrow image 19, and the left-turn indication lamp 11b are blinked or displayed in the predetermined period in these orders.
Accordingly, the arrow images 17 and 18 are not displayed at the same time, and the arrow images 19 and 20 are not displayed at the same time. In addition, any one of the arrow images 17, 18, 19, 20 is not displayed at the same time while the left-turn or right-turn indication lamp 11a, 11b is blinking.

Next, the operation of the instrument device of the first embodiment will be displayed.
In the first embodiment, the display 5 is arranged at the center of the instrument panel 2 in the left and right direction to display diverse information on the vehicle such as the information obtained from a car navigation system.
Herein, the information displayed in the images 16 on the display 5 can be displayed with many colors, decorations and others compared to the meters and the various displays/warning lamps arranged on the instrument panel 2. Accordingly, the consciousness of the driver has the tendency to be directed to the information in the display images 16 when the display image 16 is displayed on the display 5.
This might cause a problem in that the driver drives the vehicle, turning on the left-turn or right-turn signal switch without regard to the blinking of the left-turn or right-turn signal indication lamp after the driver turns on the hazard switch, thereby turning on the left-turn and right-turn signal indication lamps.

On the contrary, in the combination meter 1 of the first embodiment, the arrow images 17, 18, 19, 20 are displayed in the display image 16 displayed on the display 5, so that the consciousness of the drive who gazes the display image 16 on the display 5 can be easily directed to the blinking of the left-turn or right-turn signal indication lamp 11a, 11b.
This enables the degree of recognition of the driver to the blinking of left-turn or right-turn signal indication lamp 11a, 11b to be improved, thereby preventing the driver from forgetting to turn off the hazard switch as described above.

Especially, the arrow image 17, 18, 19, 20 are blinked in the same period as those of the left-turn and right-turn signal indication lamps 11a, 11b, so that the driver can have a feeling of unity in the left-turn and right-turn signal indication lamps 11a, 11b and the arrow images 17, 18, 19, 20, recognizing a relationship between the blinking displays of the arrow images 17, 18, 19, 20 and the blinking of the left-turn and right-turn signal indication lamps 11a, 11b.
Therefore, the degree of recognition of the driver to the blinking of the left-turn and right-turn signal indication lamps 11a, 11b can be improved.

In addition, the arrow images 17, 18 are designed to have an arrow shape similar to the left-turn signal indication lamp 11a and also have the same direction, while the arrow images 19, 29 are designed to have an arrow shape similar to the right-turn signal indication lamp 11b and also have the same direction. Therefore, the driver can easily image the blinking of the turn signal lamp when the driver sees the blinking displays of the arrow images 17, 18, 19, 20, and the degree of the driver's recognition to the blinking of the left-turn or right-turn signal indication lamp 11a, 11b is improved.

In addition, in the first embodiment, the arrow images 17, 18, and 19, 20 are respectively arranged near the left-turn and right-turn signal indication lamp 11a, 11b, and they are arranged on a straight line, so that the driver can have a feeling of unity of the left-turn and right-turn signal indication lamp 11a, 11b and the arrow images 17, 18, 19, 20.
Herein, the display 5 is arranged at the position deeper than the instrument panel 2, which might degenerate its design of appearance because the feeling of unity and continuous display of the instrument panel 2 and the display 6 are degenerated due to the step formed by the display surface 5a of the display 5 and the character panel surface 2a of the instrument panel 2.
On the contrary, the arrow images 17, 18, and 19, 20 are respectively arranged near the left-turn and right-turn signal indication lamps 11a, 11b, and they are located on the straight line, and accordingly the first embodiment can provide the feeling of continuous display and unity of the display surface 5a and the character panel surface 2a, improving the design of appearance of the combination meter 1.

In addition, in the first embodiment, using an arrangement where the display surface 5 of the display 5 is arranged at a vehicle front side far from the eye point (the position of eyes) of the driver, for example, when the left-turn signal switch is turned on, the arrow image 18, the arrow image 17, and the left-turn signal indication lamp 11a is turned on or displayed in these orders.
Similarly, when the right-turn signal switch is turned on, the arrow image 20, the arrow image 19, and the right-turn signal indication lamp 11b is turned on or displayed in these orders.
As a result, providing the feeling of the continuous display as if the display surface 5a and the character panel surface 2a are on the same display surface as described above, the first embodiment can provide a stereoscopic dramatic impact having a sense of depth as if the blinking of the left-turn and right-turn signal indication lamps 11a, 11b pops up from the display surface 5a toward the character panel surface 2a.
Further, in the first embodiment, the arrow images 18, 20 employ the smallest arrow, the arrow images 17, 19 employ an intermediate arrow, and the left-turn and right-turn signal indication lamps 11a, 11b employ the largest arrow, and accordingly it can emphasis the sense of depth.

The instrument of the first embodiment can provide the effects listed below.
(1) The combination meter 1 equipped with the display 5 in the instrument panel 2 has the left-turn and right-turn signal indication lamps 11a, 11b arranged on the instrument panel 2, and the control unit 12 to display the arrow images 17, 18, 19, 20 that indicate the change in the lighting state (the blinking) of the indication lamps (the left-turn and right-turn signal indication lamps 11a, 11b) in the display image 16 on the display 5. Therefore, the arrow images 17, 18, 19, 20 can improve the degree of driver's recognition to the blinking of the left-turn and right-turn signal indication lamps 11a, 11b.

(2) The control unit 12 controls to display the arrow images 17, 18, 19, 20 in the blinking state in the same period as that of the change in the lighting state of the indication lamps. Therefore, it can provide the feeling of unity in the left-turn and right-tnrn signal indication lamps 11a, 11b and the arrow images 17, 18, 19, 20, thereby improving the degree of driver's recognition to the blinking of the left-turn and right-turn signal indication lamps 11 a, 116.

(3) The control unit 12 controls to display the arrow images the arrow images 17, 18, 19, 20 in shapes similar to those of the indication lamps. Therefore, the driver can easily image that the left-turn or right-turn signal indication lamps 11 a, 11b is blinking based on the blinking of the arrow images 17, 18, 19, 20.

(4) The indication lams are arranged near the outer circumference of the display 5, and the control unit 15 controls to display the arrow images 17, 18, 19, 20 to be displayed at the indication lamp sides apart from the center of the display image 16. Therefore, it can provide the feeling of unity or the left-turn and right-turn signal indication lamps 11a, 11b and the arrow images 17, 18, 19, 20.

(5) The control unit 12 controls to display the arrow images 17, 18, 19, 20 and the indication lamps on the straight line. Therefore, it can provide the feeling of continuous display and unity, improving the design of appearance of the combination meter 1.

(6) The display surface 5a of the display 5 is arranged at the vehicle front side relative to the character panel surface 2a of the instrument panel 2 to form the step between the display surface 5a and the character panel surface 2a. Therefore, it can provide the stereoscopic dramatic impact having the sense of depth.

(7) The indication lamps employ the left-turn and right-turn signal indication lamps 11a, 11b arranged at the left and right sides of the display 5. Therefore, it can prevent the driver from forgetting to turn off the hazard switch.

### <SECOND EMBODIMENT

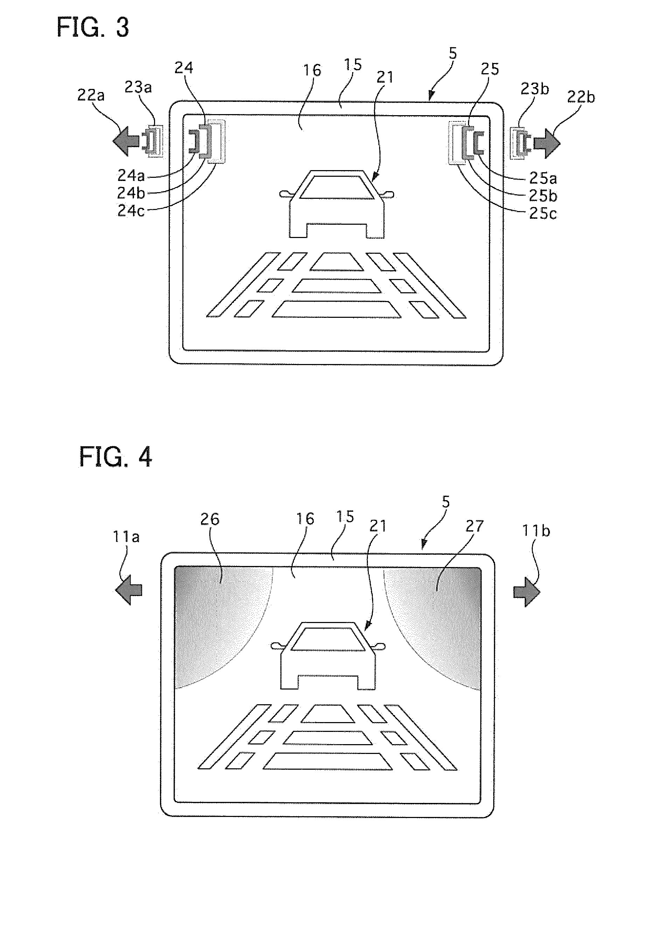

FIG. 3 shows a front view of a main part of a combination meter 1 that displays left-turn and right-turn signal indication lamps (left and right arrows 22a, 22b and left and right wave pattern shapes 23a, 23b) and a display image 16 on a display 5 according to a second embodiment of the present invention. Incidentally, the parts similar to those of the first embodiment are described by using the same terms, being indicated by the same reference numbers.

In the second embodiment, a left arrow 22a and a left wave pattern shape 23a are provided as a left-turn signal indication lamp, while a right arrow 22b and a right wave pattern shape 23b are provided as a right-turn signal indication lamp.
The left and right arrows 22a, 22b respectively have the same shapes as those of the left-turn and right-turn signal indication lamps 11a, 11b. The left wave pattern shape 23a is arranged between the left arrow 22a and the display 5, while the right wave pattern shape 23b is arranged between the right arrow 22b and the display 5. The left and right wave pattern shapes 23a, 23b have three different sized U-letter shapes that are built up to open toward the outer sides in a lateral direction of a motor vehicle to express spreading of the wave patterns. The left and right arrows 22a, 22b and the left and right wave pattern shapes 23a, 23b are gradated so that their shade of color becomes lower as it goes from the outer side to the inner side in the lateral direction. The left wave pattern shape 23a is blinked at the same timing as that the left arrow 22a by using the same light source (LED) as that of the left arrow 22a. This operation is similar to that of the right wave pattern shape 23b and the right arrow 22b.

In the second embodiment, the left and right wave pattern images 24, 25 are displayed to be blinked in the display image 16 displayed on the display 5 in the same period as that of the blinking of the left-turn and right-turn signal indication lamp (the left and right arrows 22a, 22b and the left and right wave pattern shapes 23a, 23b), where the left and right wave pattern images 24, 25 have the shapes similar to those of the left and right wave pattern shapes 23a, 23b.
The left and right wave pattern images 24, 25 have three different U-letter shapes (first U-letter shape parts 24a, 25a, second U-letter shape parts 24a, 25b, and third U-letter shape parts 24c, 25 c) that are built up to open toward the outer sides in the lateral direction similarly to those of the left and right wave pattern shapes 23a, 23b. The U-letter shape parts are gradated similarly to those of the left and right wave pattern shapes 23a, 23b so that their tones of color become lighter (their shades of color become lower) as it goes from the outer side to the inner side in the lateral direction.

The left and right wave pattern images 24, 25 are respectively displayed in these orders from the outer side in the lateral direction after the lighting in the blinking of the left-turn and right-turn signal indication lamps (the left and right arrows 22a, 22b and the left and right wave pattern shapes 23a, 23b) is blinked. For example, after the left-turn signal indication light (the left arrow 22a and the left wave pattern shape 23 a) is turned on, the first U-letter shape part 24a is turned on, the second U-letter shape part 24b is turned on a little later than the lighting of the first U-letter shape part 24a, and then the third U-letter shape part 24c is turned on a little later than the lighting of the second U-letter shape part 24b.
Accordingly, the first U-letter shape part 24a is surely turned on when the second U-letter shape part 24b is turned on, and the first and second U-letter shape parts 24a, 24b are surely turned on when the third U-letter shape part 24c is turned on.
When the left-turn signal indication lamp (the left arrow 22a and the left wave pattern shape 23a) is turned off, any of U-letter shape part 24a, 24b, 24c are not displayed.
The operation of the right wave pattern image 25 is similar to that of the left wave pattern image 24.

Next, the operation of the instrument device of the second embodiment will be described.
In the second embodiment, when the left-turn signal switch is turned on for example, the left-turn signal indication lamp (the left arrow 22a and the left wave pattern shape 23a) is blinked in the period where the left-turn signal indication lamp blinks. Then the first U-letter shape part 24a, the second U-letter shape part 24b, and the third U-letter shape part 24c of the left wave pattern image 24 are displayed in these orders.
Similarly, when the right-turn signal switch is turned on, in the period where the right-turn signal indication lamp (the right arrow 22b and the right wave pattern shape 23b) is blinked, the right-turn signal indication lamp is blinked. Then the first U-letter shape part 25a, the second U-letter shape part 25b, and the third U-letter shape part 25c of the right wave pattern image 25 are displayed in these orders.

This can provide the effects similar to those of the first embodiment: a dramatic impact such that the wave pattern spreads in the display image 16 on the display 5 according to the lighting of the left-turn and right-turn signal indication lamps. The degree of driver's recognition to the blinking of the left-turn and right-turn signal indication lamps can be improved, a feeling of continuous display and unity of the display surface 5a and the character panel 2a, and a stereoscopic dramatic impact having a sense of depth such that the wave pattern spreads from the character panel surface 2a toward the display surface 5a.

### <THIRD EMBODIMENT>

FIG. 4 shows a front view of a main part of a combination meter 1 that displays left-turn and right-turn signal indication lamps 11a, 11b and a display image 16 on a display 5 according to a third embodiment of the present invention. Incidentally, the parts similar to those of the first embodiment are described by using the same terms and the same reference numbers.

In the third embodiment, gradation display parts 26, 27 are provided in shapes like a circular arc at left and right upper corners of the display 5, where they gradate the colors of background of a display image 16 displayed on a display 5 in the same period as that of blinking of the left-turn and right-turn signal indication lamps 11a, 11b.
The left gradation display part 26 corresponds to the blinking of the left-turn signal indication lamp 11a, while the right gradation display part 27 corresponds to the blinking of the right-turn signal indication lamp 11b. The gradation display parts 26, 27 gradate the color of background so that the tone of the background color of the display image 16 gradually becomes lighter from the left and right upper corners of the display 5, which expresses spreading of wave pattern on the display image 16 similarly to the left and right wave pattern images 24, 25 of the second embodiment. The outer edges of the gradation display parts 26, 27 are set to have a size where they do not interfere with a picture image 21 displayed in the display image 16.

Next, the operation of the instrument device of the third embodiment will be described.

In the third embodiment, the color of the background of the display image 16 displayed on the display 5 is gradated in the same period as that of the blinking of the left-turn and right-turn signal indication lamps 11a, 11b. This can provide the effects similar to those of the second embodiment: a dramatic impact such that the wave pattern spreads in the display image 16 on the display 5 according to the lighting of the left-turn and right-turn signal indication lamps. The degree of driver's recognition to the blinking of the left-turn and right-turn signal indication lamps can be improved, a feeling of continuous display and unity of the display surface 5a and the character panel 2a, and a stereoscopic dramatic impact having a sense of depth such that the wave pattern spreads from the character panel surface 2a toward the display surface 5a.

### <FOURTH EMBODIMENT>

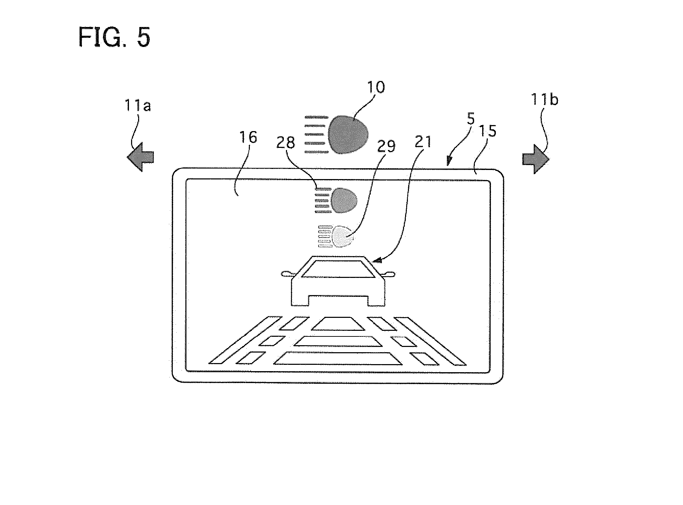

FIG. 5 shows a front view of a main part of a combination meter 1 that displays a high-beam indication lamp 10 and display image 16 of a display 5. Incidentally, the parts similar to those of the first embodiment are described by using the same terms and the same reference numbers.

As shown in FIG. 5, the high-beam indication lamp 10 is arranged near an upper portion of the display 5 in the fourth embodiment.

The fourth embodiment has an object to improve the degree of driver's recognition to lighting (a change in a lighting state) of the high-beam indication lamp 10. High-beam display images 28, 29 are displayed in the display image 16 displayed on the display 5 in synchronization with the lighting of the high-beam indication lamp 10, where the images 28, 29 have the shape similar to that of the high-beam indication lamp 10. The high-beam display images 28, 29 are arranged above the picture image 21 and near the high-beam indication lamp 10, and they are arranged on a straight line.
The high-beam display image 28 is arranged above the high-beam display image 29, being larger than the high-beam display image 29 and smaller than the high-beam indication lamp 10.
The colors of the high-beam display images 28, 29 are the same as that color (for example blue) of the high-beam indication display light 10. The brightness becomes lower in following orders of the high-beam indication lamp 10, the high-beam display image 28, and the high-beam display image 29.
Incidentally, instead of the different brightness in the same color, the tone may be changed in the same system color. In this case, the tone is set lighter in the following orders of the high-beam indication lamp 10, the high-beam display image 28, and the high-beam display image 29.

Next, the operation of the instrument device of the fourth embodiment will be described.

In the combination meter 1 of the fourth embodiment, the high-beam display images 28, 29 are displayed in the display image 16 displayed on the display 5 when the high-beam indication lamp 10 is turned on. This enables the driver who gazes the display image 16 on the display 5 to easily direct his or her mind toward the lighting of the high-beam indication lamp 10. Therefore, it can improve the degree of driver's recognition to the lighting of the high-beam indication lamp 10, preventing the driver from forgetting to turn off the high-beam and also from keeping running with the high-beam lamp ON.
Especially, the high-beam display images 28, 29 have the designs similar to that of the high-beam indication lamp 10, so that the driver can easily image, based on the display of the high-beam display images 28, 29, that the high-beam indication lamp 10 is turned on. This improves the degree of driver's recognition to the lighting of the high-beam indication lamp 10.

In addition, in the fourth embodiment, the high-beam display images 28, 29 are arranged near the high-beam indication lamp 10 and on the straight line. Therefore, this can provide a feeling of unity of the high-beam indication lamp 10 and the high-beam display images 28, 29. Herein, in the fourth embodiment, the display 5 is arranged at the position deeper than the instrument panel 2, which might degenerate a design of appearance, a feeling of unity, and a feeling of continuous display of the instrument panel 2 and the display 5.
On the contrary, the high-beam display images 28, 29 are arranged near the high-beam indication lamp 10 and on the straight line, which can provide the feeling of unity and the feeling of continuous display of the display surface 5 a and the character panel surface 2a.
Further, in the fourth embodiment, the high-beam display images 28, 29 have the shapes similar to that of the high-beam indication lamp 10, the size of the high-beam display image 29 is set to be the smallest, the size of the high-beam display image 28 is set to be intermediate, and the size of the high-beam indication lamp 10 is set to be the largest. This can provide a stereoscopic dramatic impact having a sense of depth.

As described above, the instrument device of the fourth embodiment has the following effect in addition to the effects (1) to (6).
(8) The indication lamp employs the high-beam indication lamp 10 that is arranged at the upper side of the display 5, so that the driver can easily recognize the shifting of the high-beam, thereby preventing the driver from keep running in a state where the high-beam lamps is kept turned on.

### <OTHER EMBODIMENT>

While the instrument device of the present invention has been described based on the embodiments, its concrete construction is not limited to the embodiments. A design change and an addition are covered by the present invention as long as it does not depart from the scope of the invention.
For example, in the first embodiment, the blinking timing of the arrow images 17, 18, 19, 20 may correspond to the blinking timing of the left-turn and right-turn signal indication lamps 11a, 11b.
In the second embodiment, the blinking timing of the wave pattern images 24, 25 may correspond to the blinking timing of the left-turn and right-turn signal indication lamps (the left and right arrows 22a, 22b and the left and right wave pattern shapes 23a, 23b). In addition, the left and right arrows 22a, 22b and the left and right wave pattern shapes 23a, 23b may have different light sources, respectively. The left and right wave pattern shapes 23a, 23b may be turned on later than those of the left and right arrows 22a, 22b.

In addition, in the third embodiment, the colors of the gradation display parts 26, 27 are not limited to the color of the background, and they may be set appropriately.
Further, in the fourth embodiment, when the high-beam indication lamp 10 is turned on, the high-beam display images 28, 29 may be blinked at different timing in order. That is, the display of the design displayed in the display image on the display may be varied in the same period as the change in the lighting state (lighting, blinking, a change in brightness) of the indication lamp.

### [DESCRIPTION OF REFERENCE NUMBERS]

- 1: combination meters (instrument device)
- 2: instrument panel
- 2a: character panel surface
- 5: display
- 5a: display surface
- 10: high beam indication lamp (indication lamp)
- 11a: left turn-signal indication lamp (indication lamp)
- 11b: right turn-signal indication lamp (indication lamp)
- 12: control unit (display control means)
- 16: display image
- 17, 18, 19, 20: arrow image (design)
- 22a: left directional arrow (indication lamp)
- 22b: right directional arrow (indication lamp)
- 23a: left wave pattern shape (indication lamp)
- 23b: right wave pattern shape (indication lamp)
- 24: left wave pattern image (design)
- 25: right wave pattern image (design)
- 26: left gradation display part (design)
- 27: right gradation display part (design)
- 28: high beam display image (design)
- 29: high beam display image (design)

## Claims

1. An instrument device equipped with a display in an instrument panel, comprising:
an indication lamp arranged on the instrument panel, and
a display control means for displaying a design indicating a change in a lighting state of the indication lamp in an screen image on the display.

2. The instrument device according to claim 1, wherein
the display control means changes a display mode of a design in the same period as a period of a change in lighting state of the indication lamp.

3. The instrument device according to claim 1 or 2, wherein
the display control means controls to display a design having a shape similar to a shape of the indication lamp.

4. The instrument device according to any one of claims 1 to 3, wherein the indication lamp is arranged in vicinity of a circumference of the display, and wherein
the control means controls to display the design at a position closer to the indication lamp than a position compared to a center position of the display image.

5. The instrument device according to claim 4, wherein
the display control means controls to display a plurality of the designs arranged on one of a straight line and a curved line together with the indication lamp.

6. The instrument device according to any one of claims 1 to 5, wherein
a step is provided between a screen surface of the display and a character panel surface of the installment panel.

7. The instrument device according to any one of claims 1 to 6, wherein
the indication lamp comprises turn-signal indication lamps respectively arranged at a left side and a right side of the display.

8. The instrument device according to any one of claims 1 to 6, wherein the indication lamp comprises a high beam indication lamp arranged at one of above the display, under the display and in a front and back direction of a motor vehicle.
